(19) Europäisches Patentamt
European Patent Office
Office européen des brevets

(11) **EP 4 572 271 A1**

(12) **EUROPEAN PATENT APPLICATION**

(43) Date of publication:
**18.06.2025 Bulletin 2025/25**

(21) Application number: **23216112.5**

(22) Date of filing: **13.12.2023**

(51) International Patent Classification (IPC):
**H04L 27/26** *(2006.01)*

(52) Cooperative Patent Classification (CPC):
**H04L 27/2607; H04L 27/2602; H04L 27/2646;**
**H04L 27/2636**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **TERVO, Oskari**
  **Oulu (FI)**

• **TIIROLA, Esa Tapani**
  **Oulu (FI)**
• **RENFORS, Markku**
  **Tampere (FI)**
• **HOOLI, Kari Juhani**
  **Oulu (FI)**
• **VALKAMA, Mikko**
  **Tampere (FI)**

(74) Representative: **Nokia EPO representatives**
**Nokia Technologies Oy**
**Karakaari 7**
**02610 Espoo (FI)**

(54) **UPLINK TRANSMISSIONS IN CELLULAR COMMUNICATION NETWORKS**

(57) According to an example aspect of the present disclosure, there is provided a method comprising obtaining a time-domain allocation for an uplink transmission, the time-domain allocation indicating a number of Orthogonal Frequency Division Multiplexing, OFDM, symbols individually comprising a cyclic prefix part and a payload part, reducing a number of time samples of a cyclic prefix part of an OFDM symbol of the number of OFDM symbols by a first number of time samples to yield a second number of time samples for the cyclic prefix part of the OFDM symbol, determining values for the first number of time samples for enhancement of a time-domain waveform of the uplink transmission, and performing the uplink transmission according to the time-domain allocation and based at least in part on the values for the first time samples.

Obtaining a time-domain allocation for an uplink transmission, the time-domain allocation indicating a number of OFDM symbols individually comprising a CP part and a payload part — 810

Reducing a number of time samples of a CP part of an OFDM symbol of the number of OFDM symbols by a first number of time samples to yield a second number of time samples for the CP part of the OFDM symbol — 820

Determining values for the first number of time samples for enchancement of a time-domain waveform of the uplink transmission — 830

Performing the uplink transmission according to the time-domain allocation and based at least in part on the values for the first time samples — 840

FIG. 8

**Description**

FIELD

Various example embodiments relate in general to cellular communication networks and more specifically, to uplink transmissions in such networks.

BACKGROUND

Uplink transmissions may be used for example in various cellular communication networks, such as in cellular communication networks operating according to 5G radio access technology. 5G radio access technology may also be referred to as New Radio, NR, access technology. 3rd Generation Partnership Project, 3GPP, develops standards for 5G/NR. There is a need to provide enhanced methods, apparatuses and computer programs related to uplink transmissions in cellular communication networks. Such enhancements may also be beneficial in other wireless communication networks, such as in 6G networks in the future.

SUMMARY

According to some aspects, there is provided the subject-matter of the independent claims. Some example embodiments are defined in the dependent claims.
The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.
According to a first aspect of the present disclosure, there is provided an apparatus comprising at least one processing core, at least one processor; and at least one memory storing instructions that, when executed by the at least one processor, cause the apparatus at least to obtain a time-domain allocation for an uplink transmission, the time-domain allocation indicating a number of Orthogonal Frequency Division Multiplexing, OFDM, symbols individually comprising a cyclic prefix part and a payload part; reduce a number of time samples of a cyclic prefix part of an OFDM symbol of the number of OFDM symbols by a first number of time samples to yield a second number of time samples for the cyclic prefix part of the OFDM symbol; determine values for the first number of time samples for enhancement of a time-domain waveform of the uplink transmission; and perform the uplink transmission according to the time-domain allocation and based at least in part on the values for the first time samples.
Example embodiments of an apparatus according to the first aspect may comprise at least one feature from the following bulleted list or any combination of the following features:

- wherein the apparatus is further caused to determine the values for the first number of time samples based on at least one value for at least one time sample of a preceding OFDM symbol and on at least one value for at least one time sample of the OFDM symbol,
- wherein the apparatus is further caused to determine the values for the first number of time samples for mitigating a phase discontinuity between a preceding OFDM symbol and the OFDM symbol,
- wherein the apparatus is further caused to determine the values for the first number of time samples by means of linear or polynomial phase interpolation between a last time sample of the preceding OFDM symbol and a first time sample of the OFDM symbol,
- wherein the apparatus is further caused to obtain, via signaling, at least one of information indicative of whether to reduce the number of time samples of the cyclic prefix part, and information indicative of the first number of time samples, by which the number of time samples of the cyclic prefix part shall be reduced, and wherein the signaling is one of:

    - a Radio Resource Control, RRC signaling;
    - a Medium Access Control - Control Element, MAC-CE, signaling; or
    - a Downlink Control Information, DCI, signaling scheduling the uplink transmission,

- wherein the apparatus is further caused to reduce the number of time samples of the cyclic prefix part of the OFDM symbol by the first number of time samples in a case that at least one criterion is met, and wherein the at least one criterion relates to one or more of:

    - whether a particular waveform is used for the uplink transmission;

- whether a particular modulation scheme is used for the uplink transmission;
- whether a particular Physical Uplink Control Channel, PUCCH, format is used for the uplink transmission, the uplink transmission being a PUCCH transmission;
- whether another uplink transmission is scheduled after or before the uplink transmission;
- whether an expected uplink transmit power to be used for the uplink transmission is above a threshold; or
- whether a frequency allocation of the uplink transmission is characterized as being, with respect to a carrier bandwidth, an inner frequency allocation, an outer frequency allocation, or an edge frequency allocation,

- wherein the first number of time samples are contiguous time samples located at the beginning of the cyclic prefix part.

According to a second aspect of the present disclosure, there is provided an apparatus comprising at least one processing core, at least one processor; and at least one memory storing instructions that, when executed by the at least one processor, cause the apparatus at least to transmit a time-domain allocation for an uplink transmission, the time-domain allocation indicating a number of Orthogonal Frequency Division Multiplexing, OFDM, symbols individually comprising a cyclic prefix part and a payload part; transmit, via signaling, at least one of information indicative of whether to reduce a number of time samples of the cyclic prefix part for enhancement of a time-domain waveform of the uplink transmission, or information indicative of a first number of time samples, by which the number of time samples of the cyclic prefix part shall be reduced; and receive the uplink transmission according to the time-domain allocation.

Example embodiments of an apparatus according to the second aspect may comprise at least one feature from the following bulleted list or any combination of the following features:

- wherein the signaling is one of:

  - a Radio Resource Control, RRC signaling;
  - a Medium Access Control - Control Element, MAC-CE, signaling; or
  - a Downlink Control Information, DCI, signaling scheduling the uplink transmission,

- wherein the apparatus is further caused to cause reduction of the number of time samples of the cyclic prefix part by the first number of time samples in a case that at least one criterion is met, and wherein the at least one criterion relates to one or more of:

  - whether a particular waveform is used for the uplink transmission;
  - whether a particular modulation scheme is used for the uplink transmission;
  - whether a particular Physical Uplink Control Channel, PUCCH, format is used for the uplink transmission, the uplink transmission being a PUCCH transmission;
  - whether another uplink transmission is scheduled after or before the uplink transmission;
  - whether an expected uplink transmit power to be used for the uplink transmission is above a threshold; or
  - whether the frequency allocation is characterized as being, with respect to a carrier bandwidth, an inner frequency allocation, an outer frequency allocation, or an edge frequency allocation.

According to a third aspect of the present disclosure, there is provided a method comprising obtaining a time-domain allocation for an uplink transmission, the time-domain allocation indicating a number of Orthogonal Frequency Division Multiplexing, OFDM, symbols individually comprising a cyclic prefix part and a payload part; reducing the number of time samples of a cyclic prefix part of an OFDM symbol of the number of OFDM symbols by a first number of time samples to yield a second number of time samples for the cyclic prefix part of the OFDM symbol; determining values for the first number of time samples for enhancement of a time-domain waveform of the uplink transmission; and performing the uplink transmission according to the time-domain allocation and based at least in part on the values for the first time samples.

Example embodiments of a method according to the third aspect correspond with the example embodiments of an apparatus according to the first aspect.

According to a fourth aspect of the present disclosure, there is provided a method comprising transmitting a time-domain allocation for an uplink transmission, the time-domain allocation indicating a number of Orthogonal Frequency Division Multiplexing, OFDM, symbols individually comprising a cyclic prefix part and a payload part; transmitting, via signaling, at least one of information indicative of whether to reduce a number of time samples of the cyclic prefix part for enhancement of a time-domain waveform of the uplink transmission, or information indicative of a first number of time samples, by which the number of time samples of the cyclic prefix part shall be reduced; and receiving the uplink transmission according to the time-domain allocation.

Example embodiments of a method according to the fourth aspect correspond with the example embodiments of an apparatus according to the second aspect.

According to a fifth aspect of the present disclosure, there is provided an apparatus comprising at least one processor, and at least one memory storing instructions that, when executed by the at least one processor, cause the apparatus at least to obtain a frequency-domain allocation for an uplink transmission, the frequency-domain allocation being associated with a number of data-bearing modulation symbols; reduce the number of data-bearing modulation symbols by a first number of modulation symbols to yield a second number of data-bearing modulation symbols, modulate data on the second number of data-bearing modulation symbols; determine values for the first modulation symbols for enhancement of a time-domain waveform of the uplink transmission; perform a transform precoding of the first number of modulation symbols and of the second number of data-bearing modulation symbols; and perform the uplink transmission according to the frequency-domain allocation and based at least in part on the first and second numbers of precoded modulation symbols.

Example embodiments of an apparatus according to the fifth aspect may comprise at least one feature from the following bulleted list or any combination of the following features:

- wherein the apparatus is further caused to determine the values for the first number of modulation symbols based on at least one value for at least one data-bearing modulation symbol of the second number of data-bearing modulation symbols,
- wherein the apparatus is further caused to determine the values for the first number of modulation symbols for mitigating a phase discontinuity between a cyclic prefix part of an Orthogonal Frequency Division Multiplexing, OFDM, symbol of the uplink transmission and a payload part of the OFDM symbol,
- wherein the apparatus is further caused to obtain, via signaling, at least one of information indicative of whether to reduce the number of data-bearing modulation symbols, or information indicative of the first number of modulation symbols, by which the number of data-bearing modulation symbols shall be reduced, and wherein the signaling is one of:

  - a Radio Resource Control, RRC signaling;
  - a Medium Access Control - Control Element, MAC-CE, signaling; or
  - a Downlink Control Information, DCI, signaling scheduling the uplink transmission,

- wherein the apparatus is further caused to reduce the number of data-bearing modulation symbols by the first number of modulation symbols in a case that at least one criterion is met, and wherein the at least one criterion relates to one or more of:

  - whether a particular waveform is used for the uplink transmission;
  - whether a particular modulation scheme is used for the uplink transmission;
  - whether a particular Physical Uplink Control Channel, PUCCH, format is used for the uplink transmission, the uplink transmission being a PUCCH transmission;
  - whether another uplink transmission is scheduled after or before the uplink transmission;
  - whether an expected uplink transmit power to be used for the uplink transmission is above a threshold; or
  - whether the frequency allocation is characterized as being, with respect to a carrier bandwidth, an inner frequency allocation, an outer frequency allocation, or an edge frequency allocation,

- wherein the apparatus is further caused to rate-match data to be modulated on the number of data-bearing modulation symbols to the second number of data-bearing modulation symbols, or puncture data to be modulated on the first number of modulation symbols,
- wherein the number of data-bearing modulation symbols forms a block of modulation symbols input to the transform precoding, and wherein the first number of modulation symbols are located at a lower edge and/or at an upper edge of the block of modulation symbols.

According to a sixth aspect of the present disclosure, there is provided an apparatus comprising at least one processing core, at least one processor; and at least one memory storing instructions that, when executed by the at least one processor, cause the apparatus at least to transmit a frequency domain allocation for an uplink transmission associated with a number of data-bearing modulation symbols; transmit, via signaling, at least one of information indicative of whether to reduce the number of data-bearing modulation symbols for enhancement of a time-domain waveform of the uplink transmission, or information indicative of a first number of modulation symbols, by which the number of data-bearing modulation symbols shall be reduced; and receive the uplink transmission according to the frequency domain allocation.

Example embodiments of an apparatus according to the sixth aspect may comprise at least one feature from the following bulleted list or any combination of the following features:

- wherein the signaling is one of:

    - a Radio Resource Control, RRC signaling;
    - a Medium Access Control - Control Element, MAC-CE, signaling; or
    - a Downlink Control Information, DCI, signaling scheduling the uplink transmission,

- wherein the apparatus is further caused to cause reduction of the number of data-bearing modulation symbols by the first number of modulation symbols in a case that at least one criterion is met, and wherein the at least one criterion relates to one or more of:

    - whether a particular waveform is used for the uplink transmission;
    - whether a particular modulation scheme is used for the uplink transmission;
    - whether a particular Physical Uplink Control Channel, PUCCH, format is used for the uplink transmission, the uplink transmission being a PUCCH transmission;
    - whether another uplink transmission is scheduled after or before the uplink transmission;
    - whether an expected uplink transmit power to be used for the uplink transmission is above a threshold; or
    - whether the frequency allocation is characterized as being, with respect to a carrier bandwidth, an inner frequency allocation, an outer frequency allocation, or an edge frequency allocation,

- wherein the apparatus is further caused to consider data modulated on the first number of modulation symbols to be punctured data.

According to a seventh aspect of the present disclosure, there is provided a method comprising obtaining a frequency-domain allocation for an uplink transmission, the frequency-domain allocation being associated with a number of data-bearing modulation symbols; reducing the number of data-bearing modulation symbols by a first number of modulation symbols to yield a second number of data-bearing modulation symbols; modulating data on the second number of data-bearing modulation symbols; determining values for the first number of modulation symbols for enhancement of a time-domain waveform of the uplink transmission; performing a transform precoding of the first number of modulation symbols and of the second number of data-bearing modulation symbols; and performing the uplink transmission according to the frequency-domain allocation and based at least in part on the first and second numbers of precoded modulation symbols.

Example embodiments of a method according to the seventh aspect correspond with the example embodiments of an apparatus according to the fifth aspect.

According to an eighth aspect of the present disclosure, there is provided a method comprising transmitting a frequency domain allocation for an uplink transmission associated with a number of data-bearing modulation symbols; transmitting, via signaling, at least one of information indicative of whether to reduce the number of data-bearing modulation symbols for enhancement of a time-domain waveform of the uplink transmission, or information indicative of a first number of modulation symbols, by which the number of data-bearing modulation symbols shall be reduced; and receiving the uplink transmission according to the frequency domain allocation.

Example embodiments of a method according to the eighth aspect correspond with the example embodiments of an apparatus according to the sixth aspect.

According to an ninth aspect of the present disclosure, there is provided an apparatus comprising means for obtaining a time-domain allocation for an uplink transmission, the time-domain allocation indicating a number of Orthogonal Frequency Division Multiplexing, OFDM, symbols individually comprising a cyclic prefix part and a payload part; means for reducing the number of time samples of a cyclic prefix part of an OFDM symbol of the number of OFDM symbols by a first number of time samples to yield a second number of time samples for the cyclic prefix part of the OFDM symbol; means for determining values for the first number of time samples for enhancement of a time-domain waveform of the uplink transmission; and means for performing the uplink transmission according to the time-domain allocation and based at least in part on the values for the first time samples.

Example embodiments of a apparatus according to the ninth aspect correspond with the example embodiments of an apparatus according to the first aspect.

According to a tenth aspect of the present disclosure, there is provided an apparatus comprising means for transmitting a time-domain allocation for an uplink transmission, the time-domain allocation indicating a number of Orthogonal Frequency Division Multiplexing, OFDM, symbols individually comprising a cyclic prefix part and a payload part; means for transmitting, via signaling, at least one of information indicative of whether to reduce a number of time samples of the cyclic prefix part for enhancement of a time-domain waveform of the uplink transmission or information indicative of a first number of time samples, by which the number of time samples of the cyclic prefix part shall be reduced; and means for receiving the uplink transmission according to the time-domain allocation.

Example embodiments of an apparatus according to the tenth aspect correspond with the example embodiments of an apparatus according to the second aspect.

According to an eleventh aspect of the present disclosure, there is provided an apparatus comprising means for obtaining a frequency-domain allocation for an uplink transmission, the frequency-domain allocation being associated with a number of data-bearing modulation symbols; means for reducing the number of data-bearing modulation symbols by a first number of modulation symbols to yield a second number of data-bearing modulation symbols; means for modulating data on the second number of data-bearing modulation symbols; means for determining values for the first modulation symbols for enhancement of a time-domain waveform of the uplink transmission; means for performing a transform precoding of the first number of modulation symbols and of the second number of data-bearing modulation symbols; and means for performing the uplink transmission according to the frequency-domain allocation and based at least in part on the first and second numbers of precoded modulation symbols.

Example embodiments of an apparatus according to the eleventh aspect correspond with the example embodiments of an apparatus according to the fifth aspect.

According to a twelfth aspect of the present disclosure, there is provided an apparatus comprising means for transmitting a frequency domain allocation for an uplink transmission associated with a number of data-bearing modulation symbols; means for transmitting, via signaling, at least one of information indicative of whether to reduce the number of data-bearing modulation symbols for enhancement of a time-domain waveform of the uplink transmission or information indicative of a first number of modulation symbols, by which the number of data-bearing modulation symbols shall be reduced; and means for receiving the uplink transmission according to the frequency domain allocation.

Example embodiments of a method according to the twelfth aspect correspond with the example embodiments of an apparatus according to the sixth aspect.

According to a thirteenth aspect of the present disclosure, there is provided a non-transitory computer readable medium having stored thereon a set of computer readable instructions that, when executed by at least one processor, cause an apparatus to at least perform the method according to the third, fourth, seventh or eighth aspect.

According to a fourteenth aspect of the present disclosure, there is provided a computer program comprising instructions which, when the program is executed by an apparatus, cause the apparatus to carry out the method according to the third, fourth, seventh or eighth aspect.

BRIEF DESCRIPTION OF THE DRAWINGS

FIG. 1 illustrates an example of a network scenario in accordance with at least some example embodiments;

FIG. 2 illustrates an example of MPR for 5 MHz CBW scenario;

FIG. 3 illustrates an example of phase discontinuity;

FIG. 4 illustrates OFDM symbols in accordance with at least some example embodiments;

FIG. 5 illustrates a block diagram in accordance with at least some example embodiments;

FIG. 6 illustrates a flow chart in accordance with at least some example embodiments;

FIG. 7 illustrates an example apparatus capable of supporting at least some example embodiments;

FIG. 8 illustrates a flow graph of a first method in accordance with at least some example embodiments;

FIG. 9 illustrates a flow graph of a second method in accordance with at least some example embodiments;

FIG. 10 illustrates a flow graph of a third method in accordance with at least some example embodiments; and

FIG. 11 illustrates a flow graph of a fourth method in accordance with at least some example embodiments.

EXAMPLE EMBODIMENTS

Embodiments of the present disclosure provide improvements for uplink transmissions in cellular communication networks. More specifically, embodiments of the present disclosure enable facilitating phase continuity in such networks.

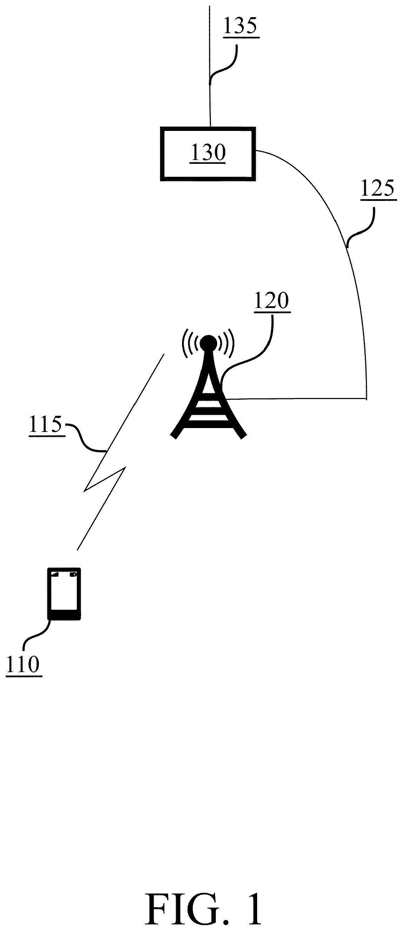

FIG. 1 illustrates an example of a network scenario in accordance with at least some example embodiments. According to the example scenario of FIG. 1, there may be a communication system, which comprises User Equipment, UE, 110, wireless network node 120 and core network element 130. UE 110 may be connected to wireless network node 120 via air interface 115. UE 110 may be connected to wireless network node 120, e.g., by using multiple beams, either simultaneously or one at a time. That is, air interface 115 may be a beam-based air interface.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal. Wireless network node 120 may be considered as a serving node for UE 110 and one cell of wireless network node 120 may be a serving cell for UE 110. At least some example embodiments of the present disclosure may be applied in the context of Low Power Wide Area, LPWA.

Air interface between UE 110 and wireless network node 120 may be configured in accordance with a Radio Access Technology, RAT, which both UE 110 and wireless network node 120 are configured to support. Examples of cellular RATs include Long Term Evolution, LTE, New Radio, NR, which may also be known as fifth generation, 5G, radio access technology and MulteFire. In the future 6G may be an example of a cellular RAT as well.

For example in the context of LTE, wireless network node 120 may be referred to as eNB, while wireless network node 120 may be referred to as gNB in the context of NR. In some example embodiments, wireless network node 120 may be referred to as a Transmission and Reception Point, TRP, or control multiple TRPs that may be co-located or non-co-located. In any case, example embodiments of the present disclosure are not restricted to any particular wireless technology. Instead, example embodiments may be exploited in any wireless communication system, wherein uplink transmissions are used.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, UE 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an outband relay. In general, the relay node may comprise two parts:

- Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;

- Mobile Termination, MT, part which may facilitate functionalities of UE 110, i.e., a backhaul link which may be the communication link between a parent node (DU), such as a DU part of wireless network node 120, and the relay, such as an IAB node. In some example embodiments, the MT part may be referred to as UE 110 and perform tasks of UE 110.

At least some example embodiments of the present disclosure may be described with help of NR specifications and terminology. However, it is noted that the same Radio Frequency, RF, limitations may be faced at least in 6G. Hence, example embodiments of the present disclosure may be applied similarly for 6G, or any other similar system in the future.

In some example embodiments, UE 110 may reduce its maximum output power depending, e.g., on the waveform, modulation order as well as on the Resource Block, RB, allocation (and power class) to satisfy emission limits and modulation quality limits. The amount of maximum output power reduction may be limited, among others, by Maximum Power Reduction, MPR, values, possibly standardized for example by the 3rd Generation Partnership Project, 3GPP. Separate MPR values may be given for edge, outer and inner RB allocations (on the configured Channel Bandwidth, CBW, with $N_{RB}$ resource blocks). The MPR values may be defined, for example in the 3GPP standard specification TS 38.101-1, as:

"Where the following parameters are defined to specify valid RB allocation ranges for Outer and Inner RB allocations:

$N_{RB}$ is the maximum number of RBs for a given Channel bandwidth and sub-carrier spacing as defined in Table 5.3.2-1 of the 3GPP standard specification TS 38.101.

$$RB_{Start,Low} = \max(1, \text{floor}(L_{CRB}/2)),$$

where max() indicates the largest value of all arguments and floor(x) is the greatest integer less than or equal to x.

$$RB_{Start,High} = N_{RB} - RB_{Start,Low} - L_{CRB}.$$

The RB allocation is an Inner RB allocation if the following conditions are met:

$$RB_{Start,Low} \leq RB_{Start} \leq RB_{Start,High},$$

and

$$L_{CRB} \leq \text{ceil}(N_{RB}/2),$$

where ceil(x) is the smallest integer greater than or equal to x.

An Edge RB allocation is one for which the RB's are allocated at the lowermost or uppermost edge of the channel with $L_{CRB} \leq 2$ RB's.

The RB allocation is an Outer RB allocation for all other allocations which are not an Inner RB allocation or Edge RB allocation."

In addition to current RB allocation regions (inner, outer, edge), it's possible to have other regions, e.g. the fourth region splitting the inner region into two parts (inner 1 in the middle of current inner, and inner 2 at the edges of current inner). Each RB region may have predetermined properties w.r.t. the UE Tx power, such as MPR and/or maximum Tx power (including possible power boost beyond the nominal Power Class).

Therefore, these allocation regions may have a fixed definition, and depend on at least one of a size of a CBW, allocation size or allocation location.

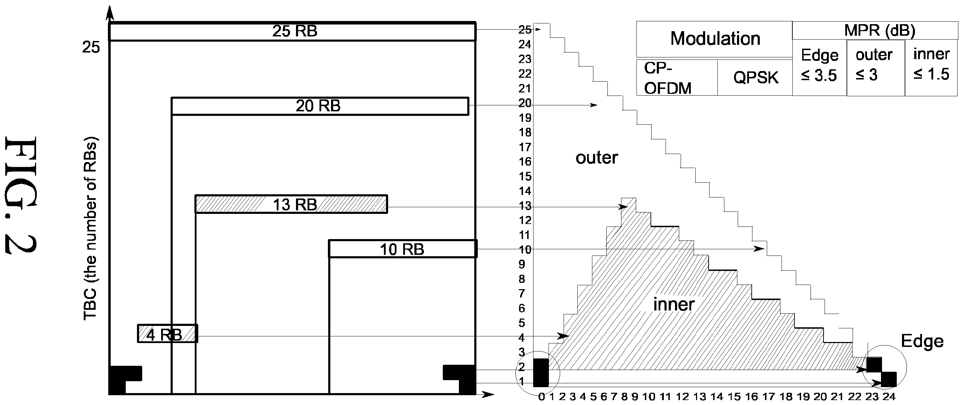

FIG. 2 illustrates an example of MPR for 5 MHz CBW scenario. For example, as we can see from the definitions for allocations, if the allocation is larger than ~50% of the CBW, it may be considered as outer allocation. The x-axis of the right hand part of FIG. 2 may be the start RB of the allocation also denoted as RBstart

Out-of-band, OOB, emissions (e.g. Adjacent Channel Leakage Ratio, ACLR, or a spectrum emission mask) may limit a coverage area of UE 110 quite quickly either when allocations are not in the center of the operating band or if the allocations are large compared to the bandwidth of the operating band. In such a case, UE 110 may need and be allowed to apply a large MPR to satisfy the OOB emission limits. It is visible also from the specifications, where MPR requirements have been defined differently for different allocation regions as shown e.g., Table 1.

**Table 1** Maximum power reduction (MPR) for power class 3

| Modulation | | Edge RB allocations | Outer RB allocations | Inner RB allocations |
|---|---|---|---|---|
| DFT-s-OFDM | Pi/2 BPSK | $\leq 3.5^1$ | $\leq 1.2^1$ | $\leq 0.2^1$ |
| | | $\leq 0.5^{2,3}$ | $\leq 0.5^2$ | $0^2$ |
| | Pi/2 BPSK w Pi/2 BPSK DMRS | $\leq 0.5^{2,3}$ | $0^2$ | $0^2$ |
| | QPSK | $\leq 1$ | | $0$ |
| | 16 QAM | $\leq 2$ | | $\leq 1$ |
| | 64 QAM | $\leq 2.5$ | | |
| | 256 QAM | $\leq 4.5$ | | |

(continued)

| Modulation | | MPR (dB) | | |
|---|---|---|---|---|
| | | Edge RB allocations | Outer RB allocations | Inner RB allocations |
| CP-OFDM | QPSK | ≤ 3 | | ≤ 1.5 |
| | 16 QAM | ≤ 3 | | ≤ 2 |
| | 64 QAM | ≤ 3.5 | | |
| | 256 QAM | ≤ 6.5 | | |

Even without any shaping, QPSK and pi/2 BPSK for Discrete Fourier Transform-spread-Orthogonal Frequency Division Multiplexing DFT-s-OFDM may be limited by ACLR or Spectral Emission Mask, SEM, for edge allocations, and even for inner allocations if the allocation size is large enough. Similarly, outer allocations (which may be between inner and edge allocations) QPSK and pi/2 BPSK for DFT-s-OFDM may be ACLR or SEM limited.

It is noted that "central allocation" may refer to Physical Resource Blocks, PRBs, which are in the middle of CBW (100 MHz), and edge may refer to PRBs which are located in one side of the CBW (100 MHz). All edge scenarios may correspond to "edge/outer". For central allocations, the narrowband cases may be "inner", while the wideband cases may be "outer".

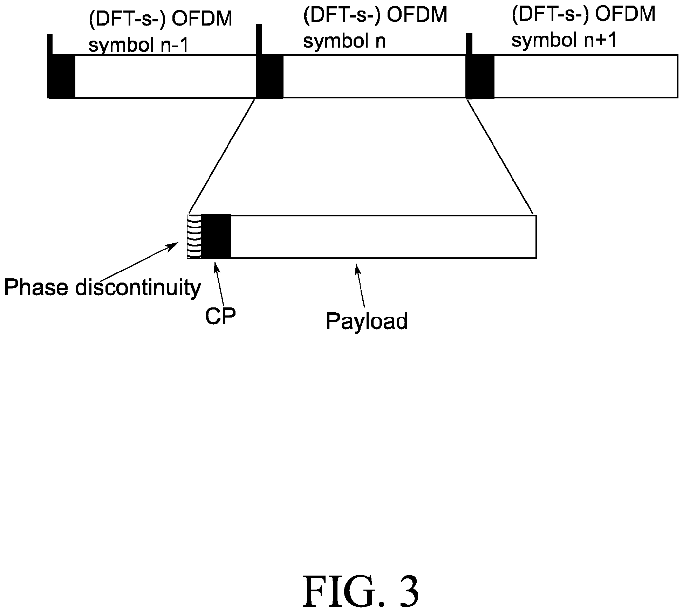

FIG. 3 illustrates an example of phase discontinuity. One reason for poor ACLR performance for existing low-Peak-to-Average Power Ratio, PAPR, DFT-s-OFDM schemes may be phase discontinuity caused by a Cyclic Prefix, CP. In other words, if a CP is copied from an end to a beginning of the symbol, there may be sudden phase changes for the complex time samples between the CP and the symbol, and then similarly between the end of the symbol and the CP of the following OFDM symbol.

In 6G, one target may be to further improve the coverage, and there may be also new modulation schemes defined which achieve even lower PAPR than existing pi/2 BPSK. Any new modulation schemes should be also optimized in terms of spectral containment when used with DFT-s-OFDM to provide the best coverage in practical scenarios. Example embodiments of the present disclosure therefore make it possible to improve coverage in these cases and facilitate phase continuity in practical scenarios, such that MPR can be reduced especially for the cases which are already limited by ACLR or SEM.

In some example embodiments, a transmission configuration may be defined for UE 110, with opportunity for full or partial phase continuity between a DFT-s-OFDM symbol and cyclic prefix. Partial phase continuity may relate to a case wherein only one of Part 1 (Phase continuity within DFT-s-OFDM symbol may be enhanced by controlling phase continuity prior to DFT operation) or Part 2 (Phase continuity between DFT-s-OFDM symbols may be enhanced controlling phase continuity using a CP) is in use, while full phase continuity may relate to a case wherein both are in use.

For example, UE 110 may be instructed, or let, to shorten payload (by "a" modulation symbols) and/or to shorten cyclic prefix (by "b" time domain samples), e.g., when at least one predefined condition applies. Payload reduction may comprise puncturing or rate matching. In the case of puncturing, a transmitted data block may be prepared for all modulation symbols, although modulation symbols with payload reduction ("a") might not be transmitted. In case of rate matching, when preparing data block to be transmitted, payload reduction ("a") may be taken into account. Hence, the modulation symbols corresponding to "a" might not be prepared at all.

A number of "a" modulation symbols (or resource elements, REs) may be referred to as a first number of modulation symbols, and a number of data-bearing modulation symbols may be reduced by "a" modulation symbols, to yield a second number of data-bearing modulation symbols. A number of "b" time domain samples may be referred to as a first number of time samples, and a number of time samples of a CP part of an OFDM symbol may be reduced by "b" time samples, to yield a second number of time samples for the CP part of the OFDM symbol.

The at least one predefined condition may comprise one or more of the following:

- predefined waveform: DFT-s-OFDM;
- predefined modulation scheme: Phase modulation (e.g. pi/2 BPSK or QPSK, or more generally pi/[2(N+1)] BPSK or pi/[2(N+1)] QPSK, where N=non-negative integer). These may additionally include some further filtering, such as 1+D, and may e.g. include trellis coding;
- predefined scheduling event:

    - transmission of Physical Uplink Shared Channel, PUSCH, or Physical Uplink Control Channel, PUCCH, with a predefined format is scheduled;
    - PUCCH format may be one without code division multiple access or a sequencebased multiplexing of UEs;

- predefined RB allocation, e.g., Outer and/or Edge allocation (and not Inner allocation);
- PUSCH transmission happening also in the next OFDM symbol (vs. end of the current transmission), or PUSCH transmission happening before the last symbol of a slot transmissions or a multi-slot transmission;

- predefined transmission power;

  - transmission power exceeds a predefined or configured threshold (UE transmit power is in a region where MPR values have an impact);

- triggering condition:

  - Radio Resource Control, RRC, configuration + an implicit indication (with predefined conditions);
  - RRC configuration + an explicit indication via an uplink grant or MAC-CE signaling.

In some example embodiments, configuration options for Part 1 (Phase continuity within DFT-s-OFDM symbol) may comprise at least one of the following. UE 110 may be instructed to shorten the payload of UE 110 by "a" modulation symbols, or up to "a" modulation symbols. The parameter "a" may be a parameter configured via RRC, or defined by the specification. The parameter "a" may depend on the allocation size, location and/or modulation order. For example, "a" may be equal to 2.

In some example embodiments, configuration options for Part 2 (Phase continuity between DFT-s-OFDM symbols) may comprise at least one of the following. UE 110 may be allowed (or asked) to shorten the effective CP by "b" time domain samples or up to "b" time domain samples. Time domain samples "b" may be located at a beginning of the CP. Parameter "b" may be a parameter configured via RRC, or defined by the specification. Parameter "b" may depend on the allocation size, location and/or modulation order. Parameter "b" may be determined according to a predefined sample rate. For example, with NR clock:

$$Ts = 1/(480 \text{ kHz} * 4096) = 0.508636 \text{ ns};$$

- Sample rate: 1.96608 GHz;
- Subcarrier spacing: 30 kHz;
- CP length: 4608*Ts (=2.34 us or 2.86 us in symbol 0 and 14);
- "b" = 1152*Ts (= ~0.6 us), effective CP length = 1.8us (or 2.3 us in symbol 0 and 14).

In some example embodiments, UE 110 may be configured to apply Part 1 or Part 2, or both, Part 1 and Part 2. Part 2 may be applied only for certain scheduling events, e.g., those where an uplink transmission is continued after previous OFDM symbol. The at least one predefined condition on transmit power may be used, e.g., only for Part 1 but not for Part 2, or vice versa. Depending on the scenario, UE 110 may support Part 1, Part 2 or both Part 1 and Part 2. The functionalities associated with Part 1 and/or Part 2 may be parts of different UE capabilities.

In some example embodiments, a transmission configuration may be associated with at least one RAN4 RF requirement, such as MPR and/or Additional MPR, A-MPR, and/or power boosting scenario for UE 110, or demodulation for wireless network node 120. The transmission configuration may be defined separately for different functionalities (Part 1, Part 2, Part 1 + Part 2).

In some example embodiments, defining phase for "a" modulation symbols and/or "b" time samples may be left for UE implementation. Such an approach may be preferred by UE vendors, for example. Another approach may be to specify the way how to determine the phase for "a" modulation symbols and/or "b" time samples. In such a case, all UEs may follow the same procedure. Such an approach makes it more feasible for receiver to benefit from the energy transmitted via "a" modulation symbols or "b" time samples.

Regardless of the approach, there may be various solutions to facilitate phase continuity. For example, in case of phase interpolation for "b" time samples, linear interpolation may be used by linearly reducing phase adjustment, starting from the needed phase rotation and ending at zero, over "b" time samples. Needed phase rotation may be an end phase of the so-far generated DFT-s-OFDM signal minus initial phase of the CP of the next DFT-s-OFDM symbol. Also other shapes than linear may be considered, such as polynomial interpolation.

For example, consider a specific simulation case with "k" as CP length, and using phase adjustment length of "b" = 6 time samples with linear interpolation:

- End-phase of previous symbol (= phase of last complex time sample of previous OFDM symbol = phase of the Nth complex time sample as output by Inverse Fast Fourier Transform, IFFT for previous OFDM symbol, where N is the IFFT size): 0.0300*pi;
- Initial phase of current CP before adjustment (= phase of the first complex time sample of the CP of current OFDM symbol = phase of (N-k+1)th complex time sample as output by IFFT for current OFDM symbol): -0.4102*pi;
- Phase adjustment over "b" time samples: 0.0300*pi + 0.4102*pi = 0.4402*pi;
- Original phases of first CP time samples: [-0.4102 -0.4046 -0.3989 -0.3932 -0.3876 -0.3820 -0.3764]*pi;
- Adjusted phases of first CP time samples: [-0.0280 -0.0861 -0.1441 -0.2021 -0.2602 -0.3183 -0.3764]*pi (adding a linearly decreasing incremental phase to the original phase of the first b complex time samples of the CP, the added phase increment being b*(0,4402/(b+1))*pi, (b-1)*(0,4402/(b+1))*pi, ..., 1*(0,4402/(b+1))*pi for the respective b time samples).

Here it is a benefit to minimize the magnitude of the phase adjustment by choosing the positive or negative phase difference value which has smallest magnitude among d, d+2*pi, d-2*pi, where "d" is the first-calculated phase difference.

In some example embodiments, a Trellis coding approach may be used for "a" modulation symbols. For example, "a" modulation symbols may be selected to follow a trellis coding scheme which provides a smooth phase transition such that the final phase value is the same as the phase of the first sample of DFT-s-OFDM symbol. Alternatively, "a" modulation symbols may be selected based on the end-phase after generating the symbol sequence for the payload bits. It may be a benefit, e.g., for symbol detection on the receiver side, if the "a" modulation symbols are selected to follow the modulation scheme, e.g., the trellis code or FDSS model.

In some example embodiments, wireless network node 120 may configure UE 110 with at least one of controlling phase continuity prior to DFT operation (=Part 1) or controlling phase continuity using a CP (=Part 2).

In case of controlling phase continuity prior to DFT operation (=Part 1), a configuration may be such that, e.g., *a* last modulation symbols of the allocation may be allowed to be used for phase continuity control. That is, the symbols for phase continuity control might not convey any data. The number of modulation symbols *a* may be 2. How to control the phase continuity may be an implementation issue, configured, or defined by a standard specification. Controlling the phase continuity may be done, e.g., by controlling an input bit sequence or last and first modulation symbols.

As an example, consider a low-PAPR binary modulation scheme using QPSK symbol constellation, where the possible phase transitions between modulation symbols are {-pi/2, 0, pi/2} and phase difference between first and last symbol may be pi. Then choosing "a"=1 and choosing the last symbol to be a suitable QPSK symbol makes it possible to reduce the phase transitions over the last symbol intervals of the generated DFT-s-OFDM symbol to be +pi/2, 0, or -pi/2. It is noted that the time-domain sample values may approach the first modulation symbol value at the end of the of the generated DFT-s-OFDM signal block. Furthermore, it may be a benefit, e.g., for phase-noise mitigation or sequential detection of trellis code, to choose the first symbol to be fixed (e.g., 1, phase 0), in which case two modulation symbols are needed for the DFT-s-OFDM symbol enhancement.

Controlling the phase continuity may be allowed, e.g., for allocations larger than a threshold or outer/edge allocations of UE 110. Controlling the phase continuity may depend on the trellis coding scheme. Transport block size may be calculated e.g., based on using an allocation of *number-of-subcarriers-per-RB*$*N\_RB$ - *a*, where $N\_RB$ is the allocated number of resource blocks. Another option is to calculate the transport block size according to *number-of-subcarriers-per-RB*$*N\_RB$, and apply puncturing for "a" modulation symbols. Value $N\_RB$ may be either total allocation or in-band allocation if spectrum extension is used. Yet another option may be to define that the configuration may be that a/2 first and last modulation symbols are allowed to be used.

In case of controlling phase continuity using a CP (=Part 2), a configuration may be such that, e.g., *b* time samples (or *b*%) of the CP are allowed to be used for phase continuity control. The number of time samples b may be configurable or fixed by a standard specification. The number of samples b may depend on modulation and allocation size and/or location. Controlling phase continuity may be allowed, e.g., for allocations larger than a threshold or outer/edge allocations of UE 110. Controlling phase continuity may be applied, e.g., for BPSK, pi/2BPSK, QPSK, or more generally pi/[2(N+1)] BPSK or pi/[2(N+1)] QPSK, where N=non-negative integer, or other low PAPR modulations.

In some example embodiments, the configuration of Part 1 or Part 2 or both Part 1 and Part 2 may be controlled (informed, activated) by an uplink grant (e.g., on/off) or RRC (configuration, for some modulation(s)). Alternatively, the phase continuity feature may be switched on/off via MAC CE. An MPR requirement may be defined based on applying Part 1 and/or Part 2. Power boost may be defined based on applying Part 1 and/or Part 2. Demodulation requirement of wireless network node 120 may be defined based on applying Part 1 and/or Part 2.

If the at least one predefined condition on transmit power is enabled, wireless network node 120 might not know whether a transmit power threshold is exceeded or not. In such a case, wireless network node 120 may estimate whether the threshold will be exceeded based on power headroom reporting and the uplink allocation size, but that might not be accurate. Instead, wireless network node 120 may demodulate the "a" modulation symbols as normal data symbols and rely on channel coding to mitigate or correct the impact of wrong modulation symbols. Correspondingly, UE 110 might not rate match for the "a" modulation symbols but just puncture the "a" modulation symbols into data symbols. That is, UE 110 might not rate match around the "a" modulation symbols.

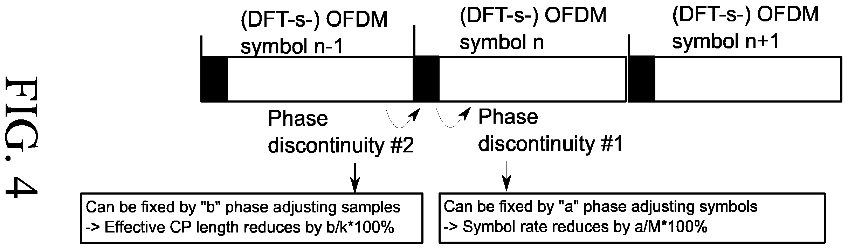

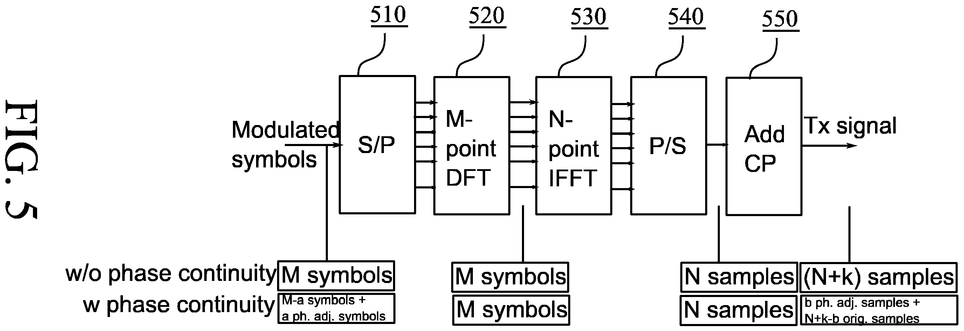

FIG. 4 illustrates OFDM symbols in accordance with at least some example embodiments. In FIG. 5, a preceding OFDM symbol is denoted by DFT-s-OFDM symbol n-1, an OFDM symbol is denoted by DFT-s-OFDM symbol n, and a next OFDM symbol is denoted by DFT-s-OFDM symbol n+1.

Phase discontinuity #1 (Part 1, phase discontinuity within DFT-s-OFDM symbol) may be fixed by "a" phase adjusting modulation symbols. In such a case, phase continuity may be controlled prior to a DFT operation.

Phase discontinuity #2 (Part 2, phase discontinuity between DFT-s-OFDM symbols) may be fixed by "b" phase adjusting time samples. In such a case, phase continuity may be controlled using a part of the CP.

FIG. 5 illustrates a block diagram in accordance with at least some example embodiments. More specifically, FIG. 5 may illustrate operation of UE 110.

UE 110 may first obtain a frequency-domain allocation for an uplink transmission, the frequency-domain allocation being associated with a number of data-bearing modulation symbols "M". After that, UE 110 may reduce the number of data-bearing modulation symbols "M" by a first number of modulation symbols "a" to yield a second number of data-bearing modulation symbols "M-a", and modulate data on the second number of data-bearing modulation symbols "M-a". A sum of the first number of modulation symbols "a" and the second data-bearing modulation symbols "M-a" may be equal to the number of data-bearing modulation symbols "M".

At step 510, UE 110 may perform a serial-to-parallel conversion of the modulated symbols. At step 520, UE 110 may perform M-point DFT. At step 530, UE 110 may perform N-point IFFT. At step 540, UE 110 may perform a parallel-to-serial conversion. At step 550, UE 110 may add a CP.

UE 110 may thus determine values for the first modulation symbols "a" for enhancement of a time-domain waveform and perform a transform precoding of the first number of modulation symbols "a" and of the second number of data-bearing modulation symbols "M-a". After that, UE 110 may perform the uplink transmission according to the frequency-domain allocation and based at least in part on the first and second numbers of precoded modulation symbols. Performing the uplink transmission may comprise generating the so-enhanced time-domain waveform.

In some example embodiments, UE 110 may determine the values for the first number of modulation symbols "a" based on at least one value for at least one data-bearing modulation symbol of the second number of data-bearing modulation symbols "M-a". In some example embodiments, the values may be transform precoded, and the transform precoded values are then used for the uplink transmission.

In some example embodiments, UE 110 may determine the values for the first number of modulation symbols "a" for mitigating a phase discontinuity between a CP part of an OFDM symbol of the uplink transmission and a payload part of the OFDM symbol (i.e., the OFDM symbol without the CP part). The first number of modulation symbols "a" may depend on at least one of a modulation scheme used for the uplink transmission and a size of the frequency-domain allocation. For example, for different low-order modulations (BPSK, QPSK, ...), the preferred first numbers of modulation symbols "a" may be different.

In some example embodiments, UE 110 may obtain, via signalling from wireless network node 120, at least one of information indicative of whether to reduce the number of data-bearing modulation symbols, and possibly information indicative of the first number of modulation symbols, by which the number of data-bearing modulation symbols shall be reduced. The signaling may be one of a RRC signaling, a MAC-CE signaling, or a DCI signaling (uplink grant) scheduling the uplink transmission.

In some example embodiments, UE 110 may reduce the number of data-bearing modulation symbols by the first number of modulation symbols in a case that at least one criterion is met. The at least one criterion may relate to one or more of whether a particular waveform is used for the uplink transmission, whether a particular modulation scheme is used for the uplink transmission, whether a particular PUCCH format is used for the uplink transmission, the uplink transmission being a PUCCH transmission, whether another uplink transmission is scheduled after or before the uplink transmission, whether an expected uplink transmit power to be used for the uplink transmission is above a threshold, and/or whether the frequency allocation is characterized as being, with respect to a carrier bandwidth, an inner frequency allocation, an outer frequency allocation, or an edge frequency allocation.

In some example embodiments, UE 110 may rate-match data to be modulated on the number of data-bearing modulation symbols "M" to the second number of data-bearing modulation symbols "M-a", or puncturing data to be modulated on the first number of modulation symbols "a". The first number of modulation symbols may be located at a lower and/or upper edge of the block of "M" modulation symbols before transformprecoding.

Wireless network node 120 may transmit a frequency domain allocation for an uplink transmission associated with a number of data-bearing modulation symbols. Wireless network node 120 may also transmit, via signaling to UE 110, at least one of information indicative of whether to reduce the number of data-bearing modulation symbols for enhancement of a time-domain waveform of the uplink transmission, or information indicative of a first number of modulation symbols, by which the number of data-bearing modulation symbols shall be reduced. Wireless network node 120 may then receive the uplink transmission according to the frequency domain allocation. The signaling may be one of a RRC signaling, a MAC-CE signaling, or a DCI signaling (UL grant) scheduling the uplink transmission.

In some example embodiments, wireless network node 120 may cause reduction of the number of data-bearing modulation symbols by the first number of modulation symbols in a case that at least one criterion is met. The at least one criterion may relate to one or more of whether a particular waveform is used for the uplink transmission, whether a particular modulation scheme is used for the uplink transmission, whether a particular PUCCH format is used for the uplink transmission, the uplink transmission being a PUCCH transmission, whether another uplink transmission is scheduled after or before the uplink transmission, whether an expected uplink transmit power to be used for the uplink transmission is above a threshold, and/or whether the frequency allocation is characterized as being, with respect to a carrier bandwidth, an inner frequency allocation, an outer frequency allocation, or an edge frequency allocation.

In some example embodiments, wireless network node 120 may consider data modulated on the first number of modulation symbols to be punctured data.

Alternatively, or in addition, UE 110 may obtain a time-domain allocation for an uplink transmission, the time-domain allocation indicating a number of OFDM symbols individually comprising a CP part and a payload part. UE 110 may obtain time samples after the parallel-to-serial conversion, i.e., after step 440. UE 110 may then reduce a number "k" of time samples of a CP part of an OFDM symbol of the number of OFDM symbols by a first number of time samples "b", to yield a second number "k-b" of time samples for the CP part of the OFDM symbol. After that, UE 110 may determine values for the first number of time samples "b" for enhancement of a time-domain waveform, and perform the uplink transmission according to the time-domain allocation and based at least in part on the values for the first time samples "b".

In some example embodiments, UE 110 may determine the values for the first number of time samples "b" based on at least one value for at least one time sample of a preceding OFDM symbol and on at least one value for at least one time sample of the (current) OFDM symbol.

In some example embodiments, UE 110 may determine the values for the first number of time samples "b" for mitigating a phase discontinuity between a preceding OFDM symbol and the OFDM symbol.

In some example embodiments, UE 110 may determine the values for the first number of time samples "b" by means of linear or polynomial phase interpolation between a last time sample of the preceding OFDM symbol and a first time sample of the OFDM symbol.

In some example embodiments, UE 110 may obtain, via signalling, at least one of information indicative of whether to reduce the number of time samples of the CP part for enhancement of a time-domain waveform of the uplink transmission, or information indicative of the first number of time samples, by which the number of time samples of the CP part shall be reduced. The signaling may be one of a RRC signaling, MAC-CE signaling, or a DCI signaling (UL grant) scheduling the uplink transmission.

In some example embodiments, UE 110 may reduce the number of time samples of the cyclic prefix part of the OFDM symbol by the first number of time samples in a case that at least one criterion is met. The at least one criterion may relate to one or more of whether a particular waveform is used for the uplink transmission, whether a particular modulation scheme is used for the uplink transmission, whether a particular PUCCH format is used for the uplink transmission, the uplink transmission being a PUCCH transmission, whether another uplink transmission is scheduled after or before the uplink transmission, whether an expected uplink transmit power to be used for the uplink transmission is above a threshold, and/or whether a frequency allocation of the uplink transmission is characterized as being, with respect to a carrier bandwidth, an inner frequency allocation, an outer frequency allocation, or an edge frequency allocation.

Wireless network node 120 may transmit the time-domain allocation for the uplink transmission, the time-domain allocation indicating a number of OFDM symbols individually comprising a CP part and a payload part. Wireless network node 120 may transmit, via signaling, at least one of information indicative of whether to reduce a number of time samples of the CP part for enhancement of a time-domain waveform of the uplink transmission, or information indicative of a first number of time samples, by which the number of time samples of the CP part shall be reduced. Wireless network node 120 may then receive the uplink transmission according to the time-domain allocation. The signaling may be one of a RRC signaling, a MAC-CE signaling, or a DCI signaling (UL grant) scheduling the uplink transmission.

In some example embodiments, wireless network node 120 may cause reduction of the number of time samples of the cyclic prefix part by the first number of time samples in a case that at least one criterion is met. The at least one criterion may relate to one or more of whether a particular waveform is used for the uplink transmission, whether a particular modulation scheme is used for the uplink transmission, whether a particular PUCCH format is used for the uplink transmission, the uplink transmission being a PUCCH transmission, whether another uplink transmission is scheduled after or before the uplink transmission, whether an expected uplink transmit power to be used for the uplink transmission is above a threshold, and/or whether the frequency allocation is characterized as being, with respect to a carrier bandwidth, an inner frequency allocation, an outer frequency allocation, or an edge frequency allocation.

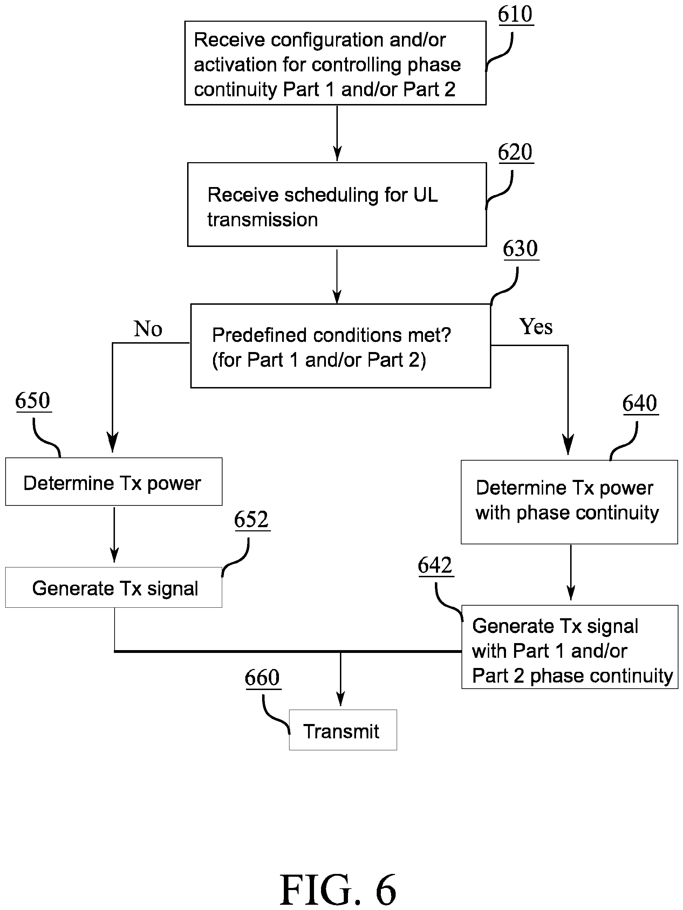

FIG. 6 illustrates a flow chart in accordance with at least some example embodiments. At step 610, UE 110 may receive a configuration and/or activation for controlling phase continuity by Part 1 and/or Part 2. At step 620, UE 110 may receive scheduling for an uplink transmission. For example, UE 110 may receive from wireless network node 120 a time-domain allocation and/or a frequency-domain allocation for the uplink transmission. The time-domain allocation may indicate a number of OFDM symbols individually comprising a CP part and a payload part. The frequency-domain allocation may be associated with a number of data-bearing modulation symbols, i.e., the allocation may be indicative of the number of data-bearing modulation symbols to be used for the uplink transmission.

At step 630, UE 110 may determine whether the at least one predefined condition is met (for Part 1 and/or Part 2). The at least one predefined condition may be referred to at least one criterion. The at least one criterion may relate to whether a particular waveform is used for the uplink transmission, whether a particular modulation scheme is used for the uplink transmission, whether a particular PUCCH format is used for the uplink transmission, the uplink transmission being a PUCCH transmission, whether another uplink transmission is scheduled after or before the uplink transmission, whether an expected uplink transmit power to be used for the uplink transmission is above a threshold, and/or whether a frequency allocation of the uplink transmission is characterized as being, with respect to a carrier bandwidth, an inner frequency allocation, an outer frequency allocation, or an edge frequency allocation.

If the at least one predefined condition is met, UE 110 may, at step 640, determine a transmit power with phase continuity. UE 110 may then, at step 642, generate a transmit signal with Part 1 and/or Part 2 phase continuity. In case of Part 1, UE 110 may, when the at least one predefined condition is met, reduce the number of data-bearing modulation symbols by a first number of modulation symbols to yield a second number of data-bearing modulation symbols, modulate data on the second number of data-bearing modulation symbols, determine values for the first modulation symbols for enhancement of a time-domain waveform of the uplink transmission, and perform a transform precoding of the first number of modulation symbols and of the second number of data-bearing modulation symbols. Alternatively, or in addition, in case of Part 2 UE 110 may, when the at least one predefined condition is met, reduce the number of time samples of a CP part of an OFDM symbol of the number of OFDM symbols by a first number of time samples to yield a second number of time samples for the CP part of the OFDM symbol, and determine values for the first number of time samples for enhancement of a time-domain waveform of the uplink transmission.

If the at least one predefined condition is not met, UE 110 may, at step 650 determine a transmit power without phase continuity. UE 110 may then, at step 652, generate a transmit signal without Part 1 and Part 2 phase continuity. At step 660, UE 110 may transmit the signal.

In case of Part 1, UE 110 may perform the uplink transmission according to the frequency-domain allocation and based at least in part on the first and second numbers of precoded modulation symbols. Alternatively, or in addition, in case of Part 2, UE 110 may perform the uplink transmission according to the time-domain allocation and based at least in part on the values for the first time samples.

Even though in some example embodiments DFT-s-OFDM is used as an example, the embodiments may be applied similarly for other single or multi carrier waveforms, such OFDM in general, comprising for example DFT-s-OFDM with SE, SC-FDE, KT-DFT-s-OFDM.

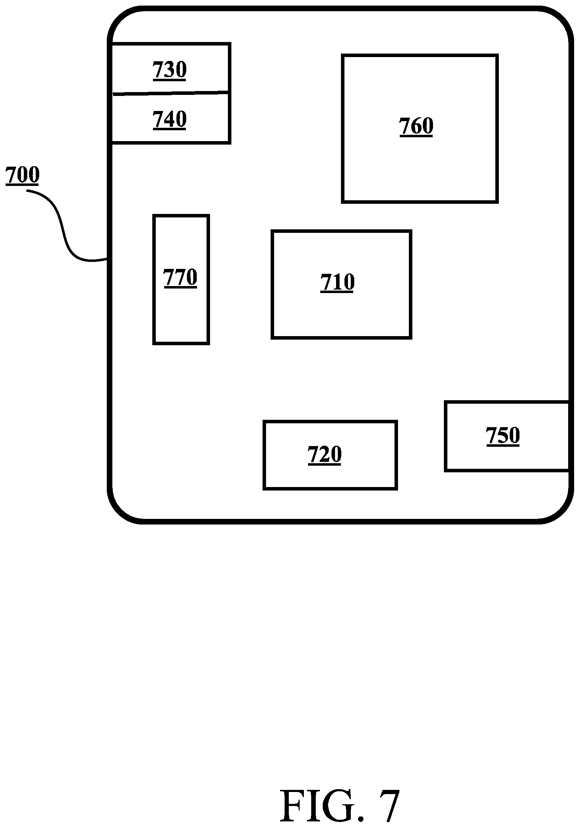

FIG. 7 illustrates an example apparatus capable of supporting at least some example embodiments. Illustrated is device 700, which may comprise, for example, UE 110 or wireless network node 120, or a control device configured to control the functioning thereof, possibly when installed therein. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise, for example, a Cortex-A8 processing core manufactured by ARM Holdings or a Steamroller processing core produced by Advanced Micro Devices Corporation. Processor 710 may comprise at least one Qualcomm Snapdragon and/or Intel Atom processor. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise randomaccess memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise computer instructions that processor 710 is configured to execute. When computer instructions configured to cause processor 710 to perform certain actions are stored in memory 720, and device 700 overall is configured to run under the direction of processor 710 using computer instructions from memory 720, processor 710 and/or its at least one processing core may be considered to be configured to perform said certain actions. Memory 720 may be at least in part comprised in processor 710. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with Global System for Mobile communication, GSM, Wideband Code Division Multiple Access, WCDMA, Long Term Evolution, LTE, and/or 5G/NR standards, for example.

Device 700 may comprise a Near-Field Communication, NFC, transceiver 750. NFC transceiver 750 may support at least one NFC technology, such as Bluetooth, Wibree or similar technologies.

Device 700 may comprise User Interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a Subscriber Identity Module, SIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver arranged to, for example, receive information via at least one electrical lead from receiver 740 for processing in processor 710. Alternatively to a serial bus, the receiver may comprise a parallel bus receiver.

Device 700 may comprise further devices not illustrated in FIG. 7. For example, where device 700 comprises a smartphone, it may comprise at least one digital camera. Some devices 700 may comprise a back-facing camera and a front-facing camera, wherein the back-facing camera may be intended for digital photography and the front-facing camera for video telephony. Device 700 may comprise a fingerprint sensor arranged to authenticate, at least in part, a user of device 700. In some example embodiments, device 700 lacks at least one device described above. For example, some devices 700 may lack a NFC transceiver 750 and/or user identity module 770.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the example embodiment, various ways of interconnecting at least two of the aforementioned devices may be selected without departing from the scope of the example embodiments.

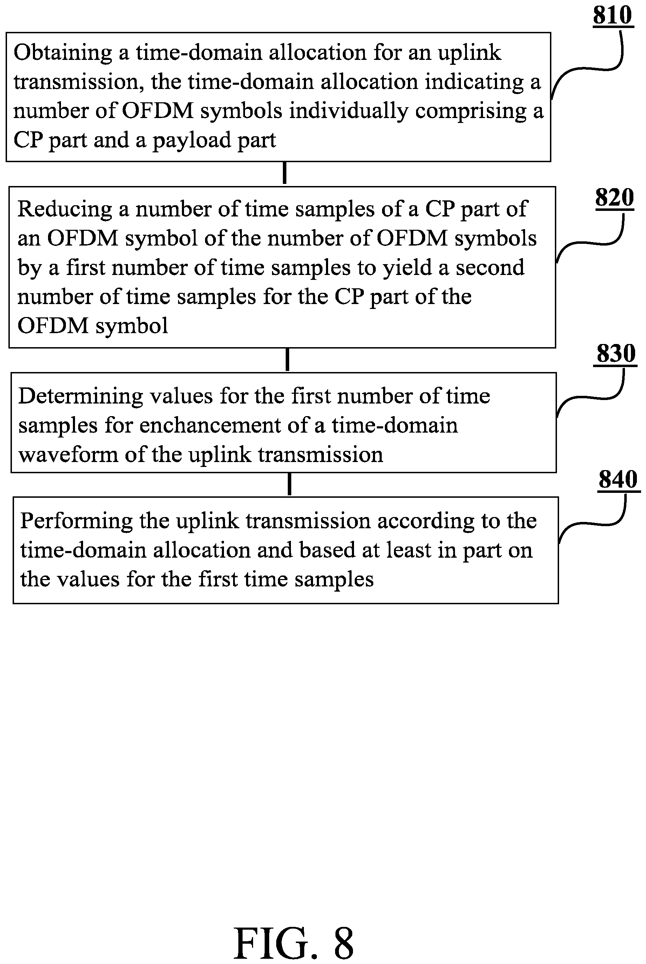

FIG. 8 is a flow graph of a first method in accordance with at least some example embodiments. The steps of the first method may be performed by UE 110 or by a control device configured to control the functioning thereof, possibly when installed therein.

The first method may comprise, at step 810, obtaining a time-domain allocation for an uplink transmission, the time-domain allocation indicating a number of Orthogonal Frequency Division Multiplexing, OFDM, symbols individually comprising a cyclic prefix part and a payload part. The first method may also comprise, at step 820, reducing a number of time samples of a cyclic prefix part of an OFDM symbol of the number of OFDM symbols by a first number of time samples to yield a second number of time samples for the cyclic prefix part of the OFDM symbol. At step 830, the first method may comprise determining values for the first number of time samples for enhancement of a time-domain waveform of the uplink transmission. Finally, at step 840, the first method may comprise performing the uplink transmission according to the time-domain allocation and based at least in part on the values for the first time samples.

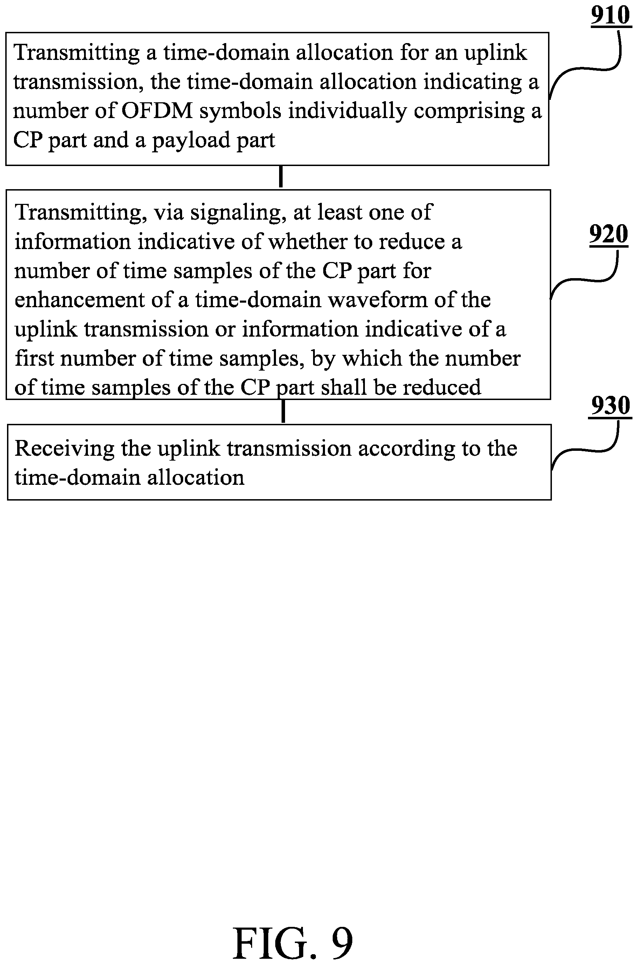

FIG. 9 is a flow graph of a second method in accordance with at least some example embodiments. The steps of the second method may be performed by wireless network node 120 or by a control device configured to control the functioning thereof, possibly when installed therein.

The second method may comprise, at step 910, transmitting a time-domain allocation for an uplink transmission, the time-domain allocation indicating a number of Orthogonal Frequency Division Multiplexing, OFDM, symbols individually comprising a cyclic prefix part and a payload part. The second method may also comprise, at step 920, transmitting, via signaling, at least one of information indicative of whether to reduce a number of time samples of the cyclic prefix part for enhancement of a time-domain waveform of the uplink transmission, or information indicative of a first number of time samples, by which the number of time samples of the cyclic prefix part shall be reduced. Finally, the second method may comprise, at step 930, receiving the uplink transmission according to the time-domain allocation.

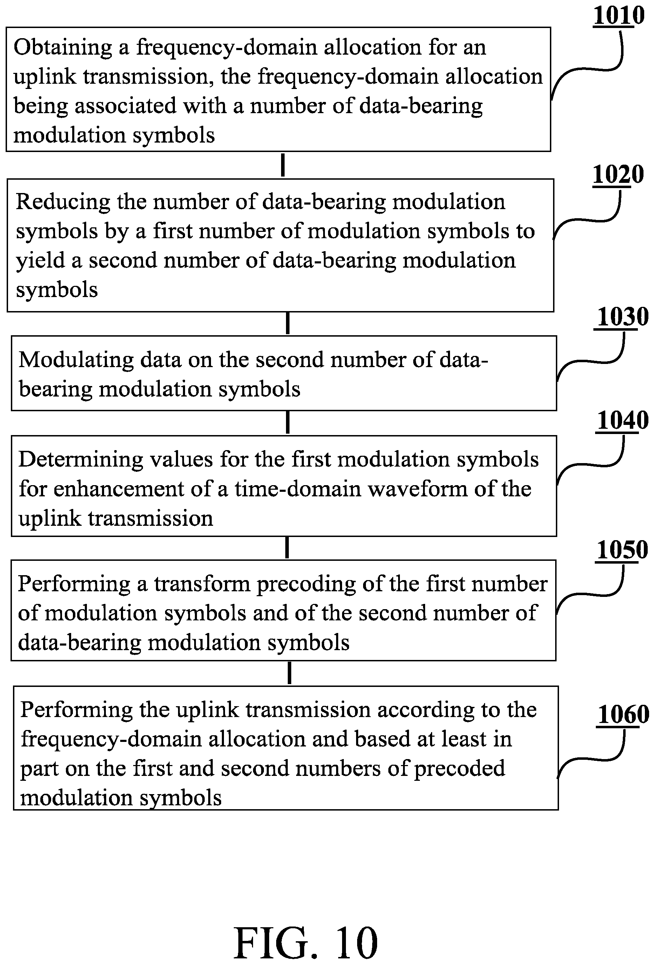

FIG. 10 is a flow graph of a third method in accordance with at least some example embodiments. The steps of the third method may be performed by UE 110 or by a control device configured to control the functioning thereof, possibly when installed therein.

The third method may comprise, at step 1010, obtaining a frequency-domain allocation for an uplink transmission, the frequency-domain allocation being associated with a number of data-bearing modulation symbols. The third method may also comprise, at step 1020, reducing the number of data-bearing modulation symbols by a first number of modulation symbols to yield a second number of data-bearing modulation symbols. At step 1030, the third method may comprise modulating data on the second number of data-bearing modulation symbols. At step 1040, the third method may comprise determining values for the first modulation symbols for enhancement of a time-domain waveform of the uplink transmission. At step 1050, the third method may comprise performing a transform precoding of the first number of modulation symbols and of the second number of data-bearing modulation symbols. Finally, the third method may comprise, at step 1060, performing the uplink transmission according to the frequency-domain allocation and based at least in part on the first and second numbers of precoded modulation symbols.

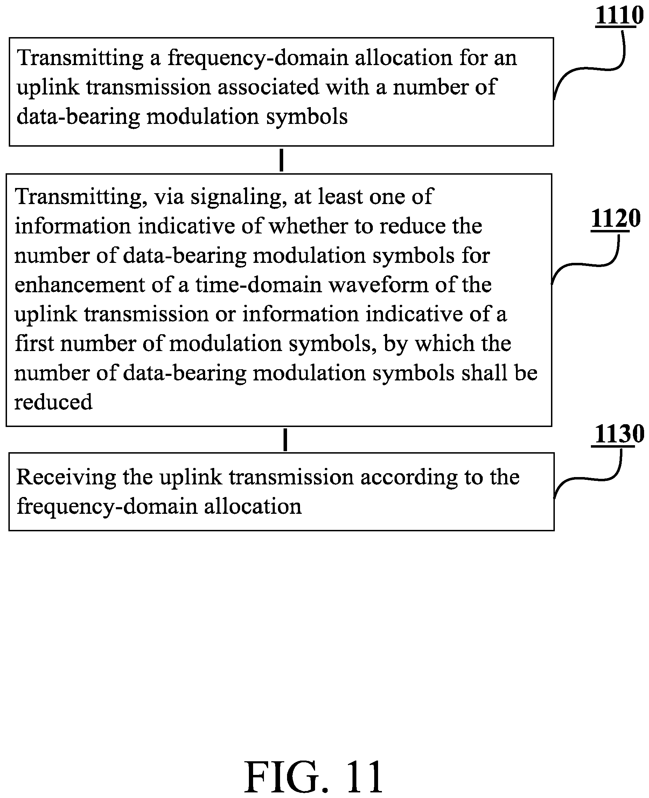

FIG. 11 is a flow graph of a fourth method in accordance with at least some example embodiments. The steps of the fourth method may be performed by wireless network node 120 or by a control device configured to control the functioning thereof, possibly when installed therein.

The fourth method may comprise, at step 1110, transmitting a frequency domain allocation for an uplink transmission associated with a number of data-bearing modulation symbols. The fourth method may also comprise, at step 1120, transmitting, via signaling, at least one of information indicative of whether to reduce the number of data-bearing modulation symbols for enhancement of a time-domain waveform of the uplink transmission, or information indicative of a first number of modulation symbols, by which the number of data-bearing modulation symbols shall be reduced. Finally, the fourth method may comprise, at step 1130, receiving the uplink transmission according to the frequency domain allocation.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some example embodiments find industrial application in cellular communication networks, for example in 3GPP networks.

ACRONYMS LIST

| | |
|---|---|
| 3GPP | 3rd Generation Partnership Project |
| ACLR | Adjacent Channel Leakage Ratio |
| A-MPR | Additional MPR |
| BS | Base Station |
| CBW | Channel Bandwidth |
| CP | Cyclic Prefix |
| DCI | Downlink Control Information |
| DFT | Discrete Fourier Transform |
| DU | Distributed Unit |
| EVM | Error Vector Magnitude |
| FDSS | Frequency Domain Spectrum Shaping |
| GSM | Global System for Mobile communication |
| IAB | Integrated Access and Backhaul |
| IBE | In-band Emissions |
| IFFT | Inverse Fast Fourier Transform |
| IoT | Internet of Things |
| LPWA | Low Power Wide Area |
| LTE | Long-Term Evolution |
| M2M | Machine-to-Machine |
| MAC-CE | Medium Access Control - Control Element |
| MPR | Maximum Power Reduction |
| MT | Mobile Termination |
| NFC | Near-Field Communication |
| NR | New Radio |
| OBO | Output back-off |
| OFDM | Orthogonal Frequency Division Multiplexing |
| OOB | Out-of-band |
| PAPR | Peak-to-Average Power Ratio |
| PRB | Physical Resource Block |
| PUCCH | Physical Uplink Control Channel |
| PUSCH | Physical Uplink Shared Channel |

RAT      Radio Access Technology
RB       Resource Block
RF       Radio Frequency
RRC      Radio Resource Control
SEM      Spectral Emission Mask
TRP      Transmission and Reception Point
UE       User Equipment
UI       User Interface
WCDMA    Wideband Code Division Multiple Access
WiMAX    Worldwide Interoperability for Microwave Access
WLAN     Wireless Local Area Network

REFERENCE SIGNS LIST

| 110 | UE |
| --- | --- |
| 115, 125, 135 | Interfaces |
| 120 | Wireless network node |
| 130 | Core network |
| 510 - 550 | Steps in FIG. 5 |
| 610-660 | Steps in FIG. 6 |
| 700 - 770 | Structure of the apparatus of FIG. 7 |
| 810 - 840 | Phases of the method in FIG. 8 |
| 910-930 | Phases of the method in FIG. 9 |
| 1010 - 1060 | Phases of the method in FIG. 10 |
| 1110 - 1130 | Phases of the method in FIG. 11 |

## Claims

1. An apparatus comprising at least one processor, and at least one memory storing instructions that, when executed by the at least one processor, cause the apparatus at least to:

   - obtain a time-domain allocation for an uplink transmission, the time-domain allocation indicating a number of Orthogonal Frequency Division Multiplexing, OFDM, symbols individually comprising a cyclic prefix part and a payload part;
   - reduce a number of time samples of a cyclic prefix part of an OFDM symbol of the number of OFDM symbols by a first number of time samples to yield a second number of time samples for the cyclic prefix part of the OFDM symbol;
   - determine values for the first number of time samples for enhancement of a time-domain waveform of the uplink transmission;
   - perform the uplink transmission according to the time-domain allocation and based at least in part on the values for the first time samples.

2. The apparatus according to claim 1, wherein the apparatus is further caused to:

   - determine the values for the first number of time samples based on at least one value for at least one time sample of a preceding OFDM symbol and on at least one value for at least one time sample of the OFDM symbol.

3. The apparatus according to claim 1 or 2, wherein the apparatus is further caused to:

   - determine the values for the first number of time samples for mitigating a phase discontinuity between a preceding OFDM symbol and the OFDM symbol.

**4.** The apparatus according to claim 3, wherein the apparatus is further caused to:

- determine the values for the first number of time samples by means of linear or polynomial phase interpolation between a last time sample of the preceding OFDM symbol and a first time sample of the OFDM symbol.

**5.** The apparatus according to any of the preceding claims, wherein the apparatus is further caused to obtain, via signaling, at least one of:

- information indicative of whether to reduce the number of time samples of the cyclic prefix part; or
- information indicative of the first number of time samples, by which the number of time samples of the cyclic prefix part shall be reduced,

and wherein the signaling is one of:

- a Radio Resource Control, RRC signaling;
- a Medium Access Control - Control Element, MAC-CE, signaling; or
- a Downlink Control Information, DCI, signaling scheduling the uplink transmission.

**6.** The apparatus according to any of the preceding claims, wherein the apparatus is further caused to:

- reduce the number of time samples of the cyclic prefix part of the OFDM symbol by the first number of time samples in a case that at least one criterion is met

and wherein the at least one criterion relates to one or more of:

- whether a particular waveform is used for the uplink transmission;
- whether a particular modulation scheme is used for the uplink transmission;
- whether a particular Physical Uplink Control Channel, PUCCH, format is used for the uplink transmission, the uplink transmission being a PUCCH transmission;
- whether another uplink transmission is scheduled after or before the uplink transmission;
- whether an expected uplink transmit power to be used for the uplink transmission is above a threshold; or
- whether a frequency allocation of the uplink transmission is characterized as being, with respect to a carrier bandwidth, an inner frequency allocation, an outer frequency allocation, or an edge frequency allocation.

**7.** An apparatus comprising:

at least one processor; and
at least one memory storing instructions that, when executed by the at least one processor,
cause the apparatus at least to:

- transmit a time-domain allocation for an uplink transmission, the time-domain allocation indicating a number of Orthogonal Frequency Division Multiplexing, OFDM, symbols individually comprising a cyclic prefix part and a payload part;
- transmit, via signaling, at least one of:

- information indicative of whether to reduce a number of time samples of the cyclic prefix part for enhancement of a time-domain waveform of the uplink transmission; or
- information indicative of a first number of time samples, by which the number of time samples of the cyclic prefix part shall be reduced; and

- receive the uplink transmission according to the time-domain allocation.

**8.** The apparatus according to claim 7, wherein the apparatus is further caused to:

- cause reduction of the number of time samples of the cyclic prefix part by the first number of time samples in a case that at least one criterion is met,

and wherein the at least one criterion relates to one or more of:

- whether a particular waveform is used for the uplink transmission;
- whether a particular modulation scheme is used for the uplink transmission;
- whether a particular Physical Uplink Control Channel, PUCCH, format is used for the uplink transmission, the uplink transmission being a PUCCH transmission;
- whether another uplink transmission is scheduled after or before the uplink transmission;
- whether an expected uplink transmit power to be used for the uplink transmission is above a threshold; or
- whether the frequency allocation is characterized as being, with respect to a carrier bandwidth, an inner frequency allocation, an outer frequency allocation, or an edge frequency allocation.

9. An apparatus comprising at least one processor, and at least one memory storing instructions that, when executed by the at least one processor, cause the apparatus at least to:

- obtain a frequency-domain allocation for an uplink transmission, the frequency-domain allocation being associated with a number of data-bearing modulation symbols;
- reduce the number of data-bearing modulation symbols by a first number of modulation symbols to yield a second number of data-bearing modulation symbols;
- modulate data on the second number of data-bearing modulation symbols;
- determine values for the first modulation symbols for enhancement of a time-domain waveform of the uplink transmission;
- perform a transform precoding of the first number of modulation symbols and of the second number of data-bearing modulation symbols; and
- perform the uplink transmission according to the frequency-domain allocation and based at least in part on the first and second numbers of precoded modulation symbols.

10. The apparatus according to claim 9, wherein the apparatus is further caused to:

- determine the values for the first number of modulation symbols based on at least one value for at least one data-bearing modulation symbol of the second number of data-bearing modulation symbols.

11. The apparatus according to claim 9 or 10, wherein the apparatus is further caused to:

- determine the values for the first number of modulation symbols for mitigating a phase discontinuity between a cyclic prefix part of an Orthogonal Frequency Division Multiplexing, OFDM, symbol of the uplink transmission and a payload part of the OFDM symbol.

12. The apparatus according to any of claims 9 to 11, wherein the apparatus is further caused to obtain, via signaling, at least one of:

- information indicative of whether to reduce the number of data-bearing modulation symbols; or
- information indicative of the first number of modulation symbols, by which the number of data-bearing modulation symbols shall be reduced,

and wherein the signaling is one of:

- a Radio Resource Control, RRC signaling;
- a Medium Access Control - Control Element, MAC-CE, signaling; or
- a Downlink Control Information, DCI, signaling scheduling the uplink transmission.

13. The apparatus according to any of claims 9 to 12, wherein the apparatus is further caused to:

- reduce the number of data-bearing modulation symbols by the first number of modulation symbols in a case that at least one criterion is met,

and wherein the at least one criterion relates to one or more of:

- whether a particular waveform is used for the uplink transmission;
- whether a particular modulation scheme is used for the uplink transmission;
- whether a particular Physical Uplink Control Channel, PUCCH, format is used for the uplink transmission, the uplink transmission being a PUCCH transmission;
- whether another uplink transmission is scheduled after or before the uplink transmission;
- whether an expected uplink transmit power to be used for the uplink transmission is above a threshold; or
- whether the frequency allocation is characterized as being, with respect to a carrier bandwidth, an inner frequency allocation, an outer frequency allocation, or an edge frequency allocation.

14. The apparatus according to any of claims 9 to 13, wherein the apparatus is further caused to:

- rate-match data to be modulated on the number of data-bearing modulation symbols to the second number of data-bearing modulation symbols, or puncture data to be modulated on the first number of modulation symbols.

15. An apparatus comprising:

at least one processor; and
at least one memory storing instructions that, when executed by the at least one processor, cause the apparatus at least to:

- transmit a frequency domain allocation for an uplink transmission associated with a number of data-bearing modulation symbols;
- transmit, via signaling, at least one of:

- information indicative of whether to reduce the number of data-bearing modulation symbols for enhancement of a time-domain waveform of the uplink transmission; or
- information indicative of a first number of modulation symbols, by which the number of data-bearing modulation symbols shall be reduced; and

- receive the uplink transmission according to the frequency domain allocation.

16. The apparatus according to claim 15, wherein the apparatus is further caused to:

- cause reduction of the number of data-bearing modulation symbols by the first number of modulation symbols in a case that at least one criterion is met,

and wherein the at least one criterion relates to one or more of:

- whether a particular waveform is used for the uplink transmission;
- whether a particular modulation scheme is used for the uplink transmission;
- whether a particular Physical Uplink Control Channel, PUCCH, format is used for the uplink transmission, the uplink transmission being a PUCCH transmission;
- whether another uplink transmission is scheduled after or before the uplink transmission;
- whether an expected uplink transmit power to be used for the uplink transmission is above a threshold; or
- whether the frequency allocation is characterized as being, with respect to a carrier bandwidth, an inner frequency allocation, an outer frequency allocation, or an edge frequency allocation.

FIG. 1

FIG. 2

FIG. 3

(DFT-s-) OFDM symbol n-1

(DFT-s-) OFDM symbol n

(DFT-s-) OFDM symbol n+1

Phase discontinuity #2

Phase discontinuity #1

Can be fixed by "b" phase adjusting samples
-> Effective CP length reduces by b/k*100%

Can be fixed by "a" phase adjusting symbols
-> Symbol rate reduces by a/M*100%

FIG. 4

**FIG. 5**

510    520    530    540    550

Modulated symbols → | S/P | → | M-point DFT | → | N-point IFFT | → | P/S | → | Add CP | → Tx signal

w/o phase continuity  | M symbols |           | M symbols |           | N samples | | (N+k) samples |
w phase continuity  | M-a symbols + a ph. adj. symbols |   | M symbols |   | N samples | | b ph. adj. samples + N+k-b orig. samples |

610

Receive configuration and/or activation for controlling phase continuity Part 1 and/or Part 2

620

Receive scheduling for UL transmission

630

Predefined conditions met? (for Part 1 and/or Part 2)

No

Yes

650

Determine Tx power

652

Generate Tx signal

640

Determine Tx power with phase continuity

642

Generate Tx signal with Part 1 and/or Part 2 phase continuity

660

Transmit

## FIG. 6

730

740

760

700

770

710

720

750

FIG. 7

__810__

Obtaining a time-domain allocation for an uplink transmission, the time-domain allocation indicating a number of OFDM symbols individually comprising a CP part and a payload part

__820__

Reducing a number of time samples of a CP part of an OFDM symbol of the number of OFDM symbols by a first number of time samples to yield a second number of time samples for the CP part of the OFDM symbol

__830__

Determining values for the first number of time samples for enchancement of a time-domain waveform of the uplink transmission

__840__

Performing the uplink transmission according to the time-domain allocation and based at least in part on the values for the first time samples

# FIG. 8

<u>**910**</u>

Transmitting a time-domain allocation for an uplink transmission, the time-domain allocation indicating a number of OFDM symbols individually comprising a CP part and a payload part

<u>**920**</u>

Transmitting, via signaling, at least one of information indicative of whether to reduce a number of time samples of the CP part for enhancement of a time-domain waveform of the uplink transmission or information indicative of a first number of time samples, by which the number of time samples of the CP part shall be reduced

<u>**930**</u>

Receiving the uplink transmission according to the time-domain allocation

# FIG. 9

**1010**

Obtaining a frequency-domain allocation for an uplink transmission, the frequency-domain allocation being associated with a number of data-bearing modulation symbols

**1020**

Reducing the number of data-bearing modulation symbols by a first number of modulation symbols to yield a second number of data-bearing modulation symbols

**1030**

Modulating data on the second number of data-bearing modulation symbols

**1040**

Determining values for the first modulation symbols for enhancement of a time-domain waveform of the uplink transmission

**1050**

Performing a transform precoding of the first number of modulation symbols and of the second number of data-bearing modulation symbols

**1060**

Performing the uplink transmission according to the frequency-domain allocation and based at least in part on the first and second numbers of precoded modulation symbols

# FIG. 10

**1110**

Transmitting a frequency-domain allocation for an uplink transmission associated with a number of data-bearing modulation symbols

**1120**

Transmitting, via signaling, at least one of information indicative of whether to reduce the number of data-bearing modulation symbols for enhancement of a time-domain waveform of the uplink transmission or information indicative of a first number of modulation symbols, by which the number of data-bearing modulation symbols shall be reduced

**1130**

Receiving the uplink transmission according to the frequency-domain allocation

# FIG. 11

Europäisches
Patentamt

European
Patent Office

Office européen
des brevets

## EUROPEAN SEARCH REPORT

**Application Number**

EP 23 21 6112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/263697 A1 (MA QIANLI [CN] ET AL) 18 August 2022 (2022-08-18) * figures 3,25 * * paragraphs [0119], [0139], [0150], [0152], [0153] * | 1-8 | INV. H04L27/26 |
| X | HASEGAWA FUMIHIRO ET AL: "Phase-Anchored SC-OFDM", IEEE WIRELESS COMMUNICATIONS LETTERS, IEEE, PISCATAWAY, NJ, USA, vol. 3, no. 1, 1 February 2014 (2014-02-01), pages 22-25, XP011540671, ISSN: 2162-2337, DOI: 10.1109/WCL.2013.102513.130548 [retrieved on 2014-02-21] * figures 1,2 * * page 1, section I, 2. par. * * page 2, left-hand column * | 1-8 | |
| X | MARKKU RENFORS ET AL: "Phase Noise Resilient Three-Level Continuous-Phase Modulation for DFT-Spread OFDM", ARXIV.ORG, CORNELL UNIVERSITY LIBRARY, 201 OLIN LIBRARY CORNELL UNIVERSITY ITHACA, NY 14853, 12 October 2021 (2021-10-12), XP091075382, * page 4, right-hand column - page 6, left-hand column, line 2 * | 1-8 | **TECHNICAL FIELDS SEARCHED (IPC)** H04L |

-/--

The present search report has been drawn up for all claims

| Place of search | Date of completion of the search | Examiner |
|---|---|---|
| Berlin | 23 July 2024 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 23 21 6112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASEGAWA FUMIHIRO ET AL: "Static sequence wrapped DFT-s-OFDM for high-speed train scenarios in high-SHF bands", 2017 EUROPEAN CONFERENCE ON NETWORKS AND COMMUNICATIONS (EUCNC), IEEE, 12 June 2017 (2017-06-12), pages 1-5, XP033122271, DOI: 10.1109/EUCNC.2017.7980754 [retrieved on 2017-07-13] * figures 2-4 * * section III; page 2 - page 3 * | 9-16 | |
| X | US 2022/131730 A1 (LIU FENGWEI [CN] ET AL) 28 April 2022 (2022-04-28) * figures 13, 14 * * paragraph [187.189] * | 9-16 | |

| | | | TECHNICAL FIELDS SEARCHED (IPC) |
|---|---|---|---|

The present search report has been drawn up for all claims

| Place of search | Date of completion of the search | Examiner |
|---|---|---|
| Berlin | 23 July 2024 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 23 21 6112

The Search Division considers that the present European patent application does not comply with the requirements of unity of invention and relates to several inventions or groups of inventions, namely:

```
1. claims: 1-8

        - reduce a number of time samples of a cyclic prefix part of
        an OFDM symbol of the number of OFDM symbols by a first
        number of time samples to yield a second number of time
        samples for the cyclic prefix part of the OFDM symbol
                                - - -


2. claims: 9-16

        - reduce the number of data-bearing modulation symbols by a
        first number of modulation symbols to yield a second number
        of data-bearing modulation symbols
                                - - -
```

**ANNEX TO THE EUROPEAN SEARCH REPORT
ON EUROPEAN PATENT APPLICATION NO.**

EP 23 21 6112

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | Publication date | Patent family member(s) | | Publication date |
|---|---|---|---|---|
| US 2022263697 A1 | 18-08-2022 | CN | 114600431 A | 07-06-2022 |
| | | EP | 4030713 A1 | 20-07-2022 |
| | | US | 2022263697 A1 | 18-08-2022 |
| | | WO | 2021081831 A1 | 06-05-2021 |
| US 2022131730 A1 | 28-04-2022 | CN | 112217753 A | 12-01-2021 |
| | | CN | 115776426 A | 10-03-2023 |
| | | EP | 3989499 A1 | 27-04-2022 |
| | | US | 2022131730 A1 | 28-04-2022 |
| | | WO | 2021008392 A1 | 21-01-2021 |

EPO FORM P0459

For more details about this annex : see Official Journal of the European Patent Office, No. 12/82